# EUROPEAN PATENT SPECIFICATION

(11) **EP 0 774 404 B1**
(45) Date of publication and mention of the grant of the patent: **01.09.1999**
(21) Application number: 96117856.3
(22) Date of filing: 07.11.1996
(51) Int. Cl.: B62H 5/00, E05B 67/00

(54) **Anti-theft device for two-wheeled vehicles**
Diebstahlsicherung für ein Zweiradfahrzeug
Dispositif antivol pour véhicule à deux roues

(30) Priority: 15.11.1995 IT PD950219
(43) Date of publication of application: 21.05.1997
(73) Proprietor: APRILIA S.P.A., 30033 Noale (Venezia) (IT)
(72) Inventor: Beggio, Ivano, 30033 Noale (Venezia) (IT)
(74) Representative: Modiano, Guido, Dr.-Ing.

(56) References cited:
- WO-A-93/18258
- DE-A- 4 400 066
- FR-A- 2 712 624
- GB-A- 2 154 316
- US-A- 4 693 098

## Description

The present invention relates to an anti-theft device for two-wheeled vehicles.

FR-A-2 712 624 discloses an anti-theft device for two-wheeled vehicles wherein said device has a flexible elongated body at one end of which is a pin having an annular groove and at the other end of which has an annular element. The first end is able to pass through the annular element on the other end so as to form a loop around a fixed object such as a pole. The device furthermore has a second body having a seat and a lock, wherein the lock can act on the groove in the pin of the elongated body when the pin is inserted into the seat of the second body. The second body furthermore has an arc-shaped portion which can hook onto an element rigidly coupled to the vehicle. When the pin is then inserted fully into the seat, it forms an enclosure together with the arc-shaped portion of the second body around the element rigidly coupled to the vehicle, the lock then being made to act on the groove in the pin.

A wide variety of commercially available anti-theft devices for two-wheeled vehicles is known; among these, the most widely used is the one constituted by an elongated element that is elastically deformable, such as a steel cable, or articulated, such as a piece of chain, and the ends whereof are associable so as to form a loop by means of a padlock, which is separate with respect to said ends, or by means of a lock which is rigidly coupled to said ends by means of its components.

The elongated element can be conveniently covered by a protective sheath made of plastics.

The main drawback that can be observed in this type of anti-theft device is due, particularly in two-wheeled motorized vehicles, to the fact that in order to anchor said vehicle to an external rod-like element it is necessary to form a loop that surrounds both the part of the vehicle and the external element, and this entails the need to have a flexible element that is particularly long and therefore particularly awkward both for handling it and for storing it somewhere inside the vehicle when it is not being used.

These anti-theft devices with a flexible element that is not particularly long allow to form only a loop that surrounds only parts of the vehicle, for example affecting simultaneously a wheel and a fork or only the wheel.

In many cases this may not be satisfactory.

Anti-theft devices are also known which are also made of a flexible elongated element, in which one end is rigidly coupled to the frame of the vehicle and the other end can be rigidly coupled to said frame with a lock that is combined with said end.

This anti-theft device has the drawback that it cannot be disengaged from the vehicle, and an attempt has been made to solve this problem by making it assume a substantially aesthetic function when not in use, by making it surround a part of the vehicle body in an adapted seat and rigidly coupling it to a third frame region with its free end.

In any case, it is not particularly flexible from the practical point of view, since it cannot be used, or is in any case difficult to be used, if there is no external element to be surrounded so as to form a loop with the flexible element.

A principal aim of the present invention is to provide an anti-theft device for two-wheeled vehicles that eliminates the drawbacks described above in conventional types.

Within the scope of this aim, a consequent primary object is to provide an anti-theft device for two-wheeled vehicles that is particularly flexible from the practical point of view and is particularly handy for the user to handle and store.

Another important object is to provide an anti-theft device that in any case is not particularly bulky and can therefore be easily stored in a pannier or under the saddle.

Another important object is to provide an anti-theft device that is structurally simple to produce and can be mass-manufactured at competitive costs.

A further object is to provide an anti-theft device that can be produced with conventional equipment and facilities.

This aim, these objects, and others which will become apparent hereinafter are achieved by an anti-theft device for two-wheeled vehicles, comprising a flexible or articulated elongated body, comprising, at a first end, an axial seat and a lock, said lock cooperating with said seat for the insertion and fixing of a pin rigidly coupled to the frame, said pin having, at its free end, an annular groove whereon said lock can act when said pin is inserted in said seat of said elongated body, a second end of said body having an annular element rigidly coupled thereto, said first end being able to pass through said annular element, when uncoupled from said pin, so as to form a loop.

This aim, these objects, and others which will become apparent hereinafter are also achieved by an anti-theft device for two-wheeled vehicles, comprising a flexible or articulated elongated body, comprising, at a first end, an axial seat and a lock, said lock cooperating with said seat for the insertion and fixing of a pin, said pin having an annular groove whereon said lock can act when said pin is inserted in said seat of said elongated body, said expanded head protruding from said pin, a second end of said body having an annular element rigidly coupled thereto, said first end being able to pass through said annular element, when uncoupled from said pin, so as to form a loop.

Further characteristics and advantages of the invention will become apparent from the following detailed description of an embodiment thereof, illustrated only by way of non-limitative example in the accompanying drawings, wherein:

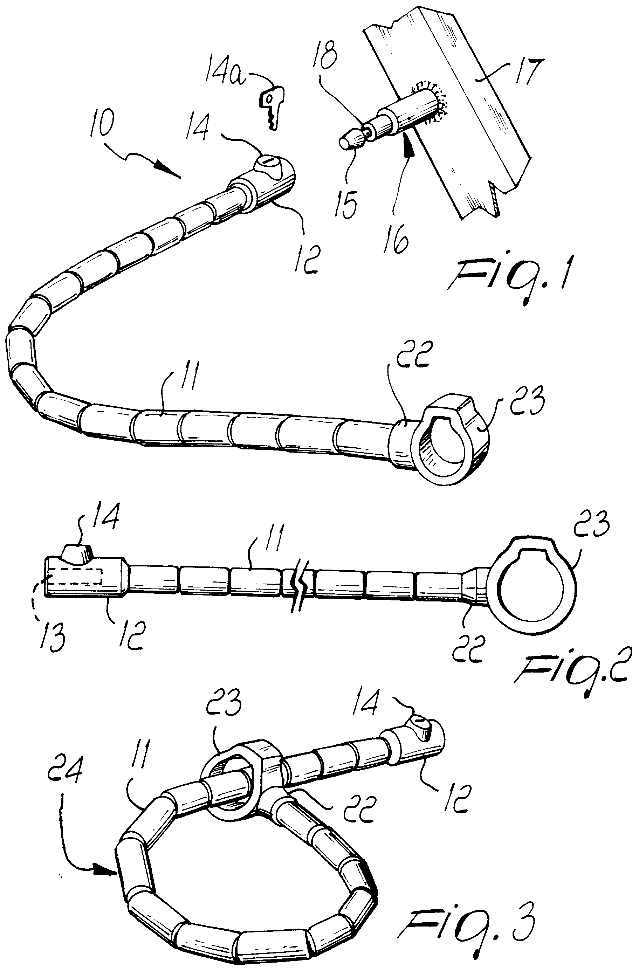

figure 1 is a perspective view of the anti-theft device in a configuration in which it is fixed to the frame of the vehicle;
figure 2 is a side view of the body of the anti-theft device;
figure 3 is a perspective view of a loop that can be formed with the body of figure 2;
figure 4 is an enlarged-scale perspective view of a detail of a configuration of the anti-theft device having no coupling to the vehicle frame;
figure 5 is a view of one way of using the anti-theft device in the configuration of figure 1;
figure 6 is a view of one way of using the anti-theft device in the configuration of figure 4.

With reference to the above figures, an anti-theft device for two-wheeled vehicles is generally designated by the reference numeral 10 and comprises an elongated body 11, which is flexible, for example constituted by a steel cable, or articulated, such as a chain with crossed links.

The body 11 can be conveniently provided with a plastic covering, not shown in the figures, for protective purposes.

A seat 13 and a lock 14 are provided, in a butt-joined arrangement, in a first end 12 of the body 11; said lock 14 has a radial arrangement and cooperates with said seat 13 for the insertion and fixing of the tip 15 of a pin 16 that is conveniently rigidly coupled to the frame 17 of the vehicle, for example by welding.

The pin 16 is of course also metallic and its tip 15 is conveniently provided with an annular groove 18 whereon a radial locator pin, which is not shown in the figures, is part of the lock 14, and is actuated by a key 14a, acts when it is inserted in the seat 13.

The seat 13 is also adapted for the insertion and fixing of a metal tip 19 that is in turn constituted by a pin 20 which is identical to the preceding pin 16 and by an expanded mushroom-shaped head 21.

A second end 22 of the body 11 is rigidly coupled to an annular element 23, which is also metallic and is shaped so as to allow the first end 12 to pass, so as to form a loop 24, when said end is not coupled to the pin 16 that is fixed to the frame 17 or to the pin 20 of the tip 19.

As regards the method for using the anti-theft device, in a first case (figure 5) it is possible to form the loop 24 around an element 25 that is external to the vehicle 26, by inserting the first end 12 in the annular element 23 and by then coupling, by means of the seat 13 and the lock 14, to the pin 16 that is rigidly coupled to the vehicle 26.

In this manner, the loop exclusively affects the external element 25 and does not affect the vehicle 26.

A second possible configuration provides for an anti-theft device 10 that does not have a pin 16 but has a tip 19.

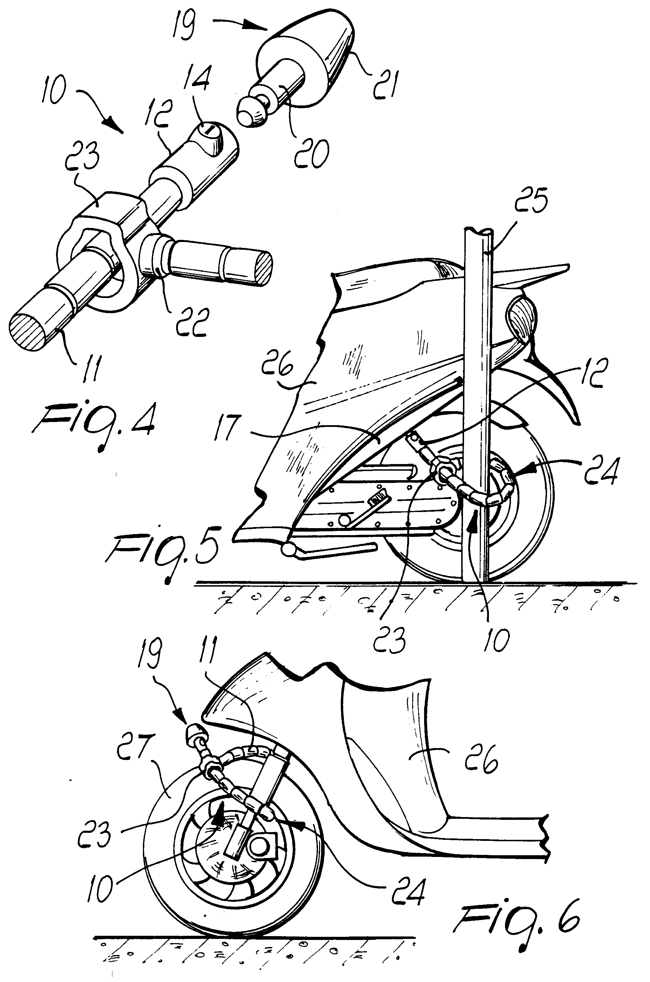

In this case (figure 6), the loop 24 can be formed for example around a wheel 27, subsequently inserting the first end 12 in the annular element 23, and then fixing the tip 19 to the first end 12 by means of the lock 14.

This prevents the disengagement of the parts because the head 21 cannot pass through the annular element 23.

In this manner, too, the loop can in any case be formed by surrounding a plurality of separate parts of the vehicle and also elements that are external to the vehicle.

In practice it has been observed that the intended aim and objects of the present invention have been achieved.

Although the fixing of the body 11 to the vehicle is essential for operation in one of the two configurations, it should in fact be noted first of all that the loop is small and therefore the body 11 is not particularly long, and secondly that the lock 14 is in no way dependent on the vehicle, since it is rigidly coupled to the body 11.

This allows rather modest lengths of the body 11, to the full benefit of the bulk of the anti-theft device and of the possibility of gathering and storing it in small spaces.

The configuration in which the tip 19 is rigidly coupled by the frame also allows handy and easy use on the part of the user.

All this is to the full benefit of constructive simplicity as well as of operating flexibility and comfort.

The invention thus conceived is susceptible of numerous modifications and variations, all of which are within the scope of the inventive concept.

All the details may furthermore be replaced with other technically equivalent elements.

In practice, the materials employed, so long as they are compatible with the contingent use, as well as the dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Anti-theft device (10) for two-wheeled vehicles, comprising a flexible or articulated elongated body (11), comprising, at a first end (12), an axial seat (13) and a lock (14), said lock (14) cooperating with said seat (13) for the insertion and fixing of a pin (16) rigidly coupled to the frame (17), said pin (16) having, at its free end, an annular groove (18) whereon said lock (14) can act when said pin (16) is inserted in said seat (13) of said elongated body (11), a second end of said body (11) having an annular element (23) rigidly coupled thereto, said first end (12) being able to pass through said annular element (23), when uncoupled from said pin (16), so as to form a loop (24).

2. Anti-theft device (10) for two-wheeled vehicles, comprising a flexible or articulated elongated body (11), comprising, at a first end (12), an axial seat (13) and a lock (14), said lock (14) cooperating with said seat (13) for the insertion and fixing of a pin (20) forming part of a tip (19) with an expanded head (21), said pin (20) having an annular groove whereon said lock (14) can act when said pin (20) is inserted in said seat (13) of said elongated body (11), said expanded head (21) protruding from said pin (20), a second end of said body (11) having an annular element (23) rigidly coupled thereto, said first end (12) being able to pass through said annular element (23), when uncoupled from said pin (20), so as to form a loop (24).

3. Anti-theft device (10) according to Claim 1 or 2, wherein said seat (13) is butt-joined to said first end (12).

4. Antitheft device (10) according to Claim 1 or 2 wherein said lock (14) lies radially.

## Patentansprüche

1. Diebstahlsicherung (10) für Zweiradfahrzeuge, die einen flexiblen oder gegliederten länglichen Grundkörper (11) aufweist, wobei sie an einem ersten Ende (12) eine axiale Aufnahme (13) und ein Schloß (14) aufweist, wobei das Schloß (14) mit der Aufnahme (13) zusammenwirkt zum Einführen und Befestigen eines starr mit dem Rahmen (17) verbundenen Bolzens (16), wobei der besagte Bolzen (16) an seinem freien Ende eine ringförmige Nut (18) aufweist, auf die das Schloß (14) einwirken kann, wenn der Bolzen (16) in die Aufnahme (13) des länglichen Grundkörpers (11) eingeführt ist, wobei das zweite Ende des Grundkörpers (11) ein starr damit verbundenes ringförmiges Teil (23) aufweist, und wobei das erste Ende (12) im von dem Bolzen (16) gelösten Zustand durch das ringförmige Teil (23) durchführbar ist um eine Schlaufe (24) zu bilden.

2. Diebstahlsicherung (10) für Zweiradfahrzeuge, die einen flexiblen oder gegliederten länglichen Grundkörper (11) aufweist, wobei sie an einem ersten Ende (12) eine axiale Aufnahme (13) und ein Schloß (14) aufweist, wobei das Schloß (14) mit der Aufnahme (13) zusammenwirkt zum Einführen und Befestigen eines Bolzens (20), der einen Teil eines Endes (19) mit einem erweiterten Kopf (21) bildet, wobei der Bolzen (20) eine ringförmige Nut aufweist, auf die das Schloß (14) einwirken kann, wenn der Bolzen (20) in die Aufnahme (13) des länglichen Grundkörpers (11) eingeführt ist, wobei der erweiterte Kopf (21) von dem Bolzen (20) absteht, wobei ein zweites Ende des Grundkörpers (11) ein damit starr verbundenes ringförmiges Teil (23) aufweist, und wobei das erste Ende (12) im von dem Bolzen gelösten Zustand durch das ringförmige Element (23) durchführbar ist um eine Schlaufe (24) zu bilden.

3. Diebstahlsicherung (10) nach Anspruch 1 oder 2, dadurch gekennzeichnet, daß die Aufnahme (13) mit dem ersten Ende (12) stumpf aneinanderstoßend verbunden ist.

4. Diebstahlsicherung (10) nach Anspruch 1 oder 2, dadurch gekennzeichnet, daß das Schloß (14) in radialer Richtung liegt.

## Revendications

1. Dispositif antivol (10) pour des véhicules à deux roues, comprenant un corps allongé flexible ou articulé (11) comprenant, à une première extrémité (12), un siège axial (13) et un verrou (14), ledit verrou (14) coopérant avec ledit siège (13) pour l'introduction et la fixation d'une broche (16) solidarisée du cadre (17), l'extrémité libre de ladite broche (16) présentant une gorge annulaire (18) sur laquelle peut agir ledit verrou (14) lorsque ladite broche (16) est introduite dans ledit siège (13) dudit corps allongé (11), une deuxième extrémité dudit corps (11) ayant un élément annulaire (23) solidarisé audit corps, ladite première extrémité (12) pouvant passer à travers ledit élément annulaire (23), lorsque celui-ci est désolidarisé de ladite broche (16), de façon à former une boucle (24).

2. Dispositif antivol (10) pour des véhicules à deux roues, comprenant un corps allongé flexible ou articulé (11) comprenant, à une première extrémité (12), un siège axial (13) et un verrou (14), ledit verrou (14) coopérant avec ledit siège (13) pour l'introduction et la fixation d'une broche (20) faisant partie d'un bout (19) avec une tête plus grosse (21), ladite broche (20) présentant une gorge annulaire sur laquelle peut agir ledit verrou (14) lorsque ladite broche (20) est introduite dans ledit siège (13) dudit corps allongé (11), ladite tête plus grosse (21) débordant de ladite broche (20), une deuxième extrémité dudit corps (11) ayant un élément annulaire (23) solidarisé audit corps, ladite première extrémité (12) pouvant passer à travers ledit élément annulaire (23),lorsque celui-ci est désolidarisé de ladite broche (20), de façon à former une boucle (24).

3. Dispositif antivol (10) selon la revendication 1 ou la revendication 2, dans lequel ledit siège (13) est abouté à ladite première extrémité (12).

4. Dispositif antivol (10) selon la revendication 1 ou la revendication 2, dans lequel ledit verrou (14) est disposé radialement.
